# EUROPÄISCHE PATENTSCHRIFT

(11) **EP 0 427 089 B1**
(45) Veröffentlichungstag und Bekanntmachung des Hinweises auf die Patenterteilung: **28.12.1994**
(21) Anmeldenummer: 90120769.6
(22) Anmeldetag: 30.10.1990
(51) Int. Cl.: B01L 5/04, B01D 47/02

(54) **Laborgerät zum Abscheiden von Stoffen aus Gasproben**
Laboratory apparatus for the separation of substances from gas samples
Appareil de laboratoire pour la séparation de substances d'un échantillon de gaz

(30) Priorität: 08.11.1989 DE 3937134
(43) Veröffentlichungstag der Anmeldung: 15.05.1991
(73) Patentinhaber: BASF Aktiengesellschaft, 67063 Ludwigshafen (DE)
(72) Erfinder: Brenner, Karl Siegfried, Dr., W-6700 Ludwigshafen (DE)

(56) Entgegenhaltungen:
- DE-C- 228 733
- FR-A- 1 048 000
- FR-A- 1 070 976
- FR-A- 2 182 534
- GB-A- 239 761
- GB-A- 541 093
- US-A- 1 887 126
- US-A- 4 737 168

## Beschreibung

Die Erfindung betrifft ein Laborgerät zum Abscheiden von gasförmigen, flüssigen und festen Stoffen aus Gasproben, bestehend aus einem zylindrischen Gefäß mit einer Hülse und einer Prallfläche und aus einem Mischeinsatz, der einen in die Hülse einsteckbaren Kern, ein durch den Kern geführtes Einlaßrohr und ein Auslaßrohr aufweist.

Nach dem Stand der Technik werden gasförmige, flüssige, tröpfchenförmige und feste Partikel, sog. Aerosole und Stäube, aus Gasen, vornehmlich aus Luft, für analytische Bestimmungen dadurch entfernt, daß sie mit einem flüssigen Absorbens (Absorption) oder mit einem oberflächenreichen Festkörper (Adsorption) in intensive, ausreichend lange Berührung gebracht werden, um so einen Austausch aus dem Gas in die Absorptions- bzw. Adsorptionsphase zu erreichen. Bekannt sind zu diesem Zweck unterschiedliche Arten von Waschflaschen, Adsorptionsmittel, wie Aktivkohle, Kieselgel, Polymer-Harze und Polyurethanschaum.

Eine besondere Ausführungsform von Absorbern, welche mit Waschflüssigkeiten arbeiten, sind in der Labortechnik als Impinger bezeichnete Laborgeräte mit einem Mischeinsatz.

Bei diesen Geräten wird der zu untersuchende Gasstrom durch eine entsprechend ausgebildete Düse in die Waschflüssigkeit derart eingeleitet, daß durch einen intensiven Aufprall des Gasstroms auf die Flüssigkeitsoberfläche eine ultraschallartige Durchmischung eintritt. Dadurch wird erreicht, daß die Durchmischung intensiv und feinstteilig erfolgt. Der gebildete Schaum bzw. die Gas-/Flüssigkeits-Mischung wird durch die mit Hilfe der Eintragsdüse erzeugten Wirbel mit der Hauptmenge der Absorptionsflüssigkeit rückvermischt. Damit wird der Austrag der Flüssigkeit sehr klein gehalten. Derartige Geräte eignen sich neben der Absorption von Gasen und Aerosolen auch sehr gut für die Adsorption von Stäuben, insbesondere von Feinststäuben.

In der Fachliteratur sind Laborgeräte dieser Art beschrieben, beispielsweise in "Analytische Methoden, Luftanalysen", Bd. 1, D. Henschler Verlag VCH (lose Blattsammlung) Kapitel: "Spezielle Vorbemerkung, Bd. 1 Luftanalysen", Seite 3 - 6.

Nach Erfahrungen mit der praktischen Anwendung solcher Geräte liegt der wirksame Arbeitsbereich des Gasdurchsatzes zwischen ca. 0,5 m³/h und 1,5 m³/h. Bei 2 m³/h ist vor allem beim Hintereinanderschalten zweier Geräte die Obergrenze für den Durchsatz einer solchen Anordnung erreicht. Der optimale Durchsatzbereich liegt zwischen ca. 1,0 und 1,5 m³/h.

Bei den heute geforderten niedrigen Nachweisgrenzen für bestimmte Stoffe (z.B. halogenierte Aromaten, polycyclische Kohlenwasserstoffe, Feinststäube usw.) müssen für eine sichere Nachweis- und vor allem Bestimmungsgrenze derart große Luft- bzw. Gasmengen untersucht werden, daß ein Durchsatz von 1,0 bis 1,5 m³/h zu niedrig ist, d.h. eine Probenahme dauert oftviel zu lange, um ein kurzzeitiges Ereignis erfassen zu können, oder die Nachweisgrenze liegt bei einigermaßen annehmbarer Probenahmezeit so hoch, daß eine sinnvolle Aussage auf Grund der geringen gesammelten Substanzmengen nicht möglich ist.

Für die heutigen Anforderungen an Messungen im Umwelt-, Emissions-, Immissions- und Arbeitsplatzbereich sind Geräte mit höheren Durchsatzleistungen erforderlich. Hinzu kommt, daß bei gemischten Beaufschlagungen von Gasströmen mit Dämpfen, Aerosolen und Stäuben zur Probenahme oft eine Kombination von Festkörperadsorption - bei hohen Gasströmen vorzugsweise mit Polyurethan-Schäumen - und Flüssigabsorption notwendig ist. Die Polyurethan-Adsorptionstechnik erlaubt hohe Durchflüsse, während für die Flüssig- und Gasabsorption mit den bekannten Geräten kein hoher Durchsatz möglich ist. Versuche, die Düse entsprechend größer (größerer Durchmesser) zu dimensionieren, haben zu keiner Verbesserung geführt. Bei größerer Düsendimension erfolgt keine gute Durchmischung mehr. Der breitere Gasstrahl verdrängt die Absorptionsflüssigkeit auf der Prallplatte, so daß keine wirkliche Durchmischung, sondern nur ein Aufprall des Gasstroms mit anschließender seitlicher Durchmischung eintritt, was mehr oder weniger einer Waschflaschen-Charakteristik entspricht. Bei zu großen Düsen und zu hohem Durchsatz wird außerdem der Druck auf die Apparateteile so groß, daß bei Glasgefäßen, die vor allem für die analytische Bestimmung notwendig sind, die Stabilität der Geräte und die Sicherheit beeinträchtigt sind.

Ausgehend vom vorstehend geschilderten Stand der Technik war die Aufgabe zu lösen, ein Laborgerät zum Abscheiden von gasförmigen, flüssigen und festen Stoffen aus Gasproben zu entwickeln, das einen wesentlich höheren Gasdurchsatz als die bekannten Geräte erlaubt, so daß für geringe zu messende Stoffkonzentrationen in einer kurzen Probenahmezeit genügend Gas gesammelt werden kann. Ferner soll das neue Laborgerät leicht handhabbar und im Hinblick auf eine vollständige Erfassung der Spurenstoffe gut spülbar sein.

Die Aufgabe wurde durch ein Laborgerät der eingangs geschilderten Art gelöst, bei dem erfindungsgemäß mehrere Düsen vorgesehen sind, die über eine Verteileinrichtung mit dem unteren Ende des Einlaßrohres in Verbindung stehen.

Weitere Einzelheiten und Vorteile des neuen Laborgerätes sind anhand in der Zeichnung schematisch dargestellter Ausführungsbeispiele nachfolgend beschrieben.

Es zeigen
- Figur 1: ein Laborgerät mit zum Gefäßboden gerichteten Düsen, für den statischen Betrieb, im Längsschnitt
- Figur 2: ein Laborgerät mit zur Gefäßwand gerichteten Düsen, mit rotierbarer Düsenanordnung, im Längsschnitt.

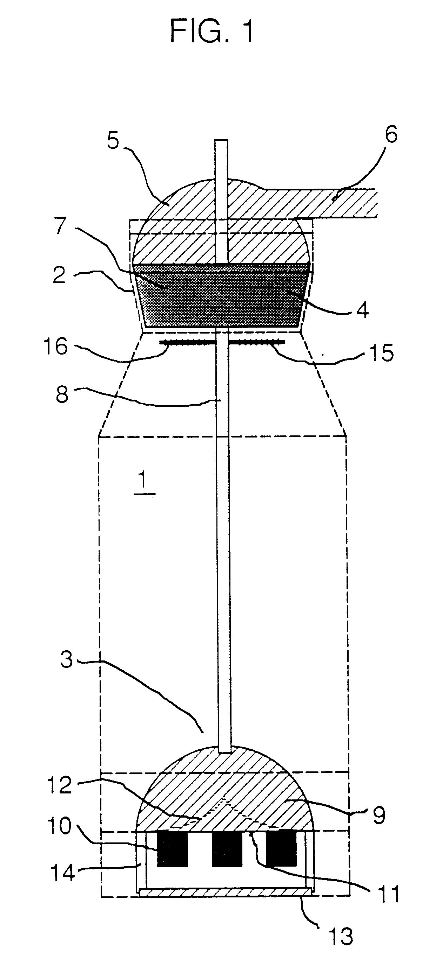

Das Laborgerät aus Glas (nachfolgendes Ausführungsbeispiel) oder einem anderen inerten Werkstoff, wie Metall oder Keramik, besteht aus zwei Geräteteilen: einem zylindrischen Glasgefäß 1 mit einer Schliffhülse 2 an der Gefäßöffnung und einem Mischeinsatz 3 mit einem in die Schliffhülse einsteckbaren Schliffkern 4. Über dem Schliffkern ist eine Sammelglocke 5 mit einem seitlichen Auslaßrohr 6 angeordnet, die über Durchbrechungen 7 im Schliffkern mit dem Inneren des Glasgefäßes verbunden ist. Zum Ansaugen des zu untersuchenden Gases ist ein Einlaßrohr 8 durch die Sammelglocke 5 und den Schliffkern 4 geführt, welches im unteren Teil das Glasgefäßes 1 zentral in eine halbkugelförmige, geschlossene Glasglocke 9 (Figur 1) mündet. Die Glasglocke dient als Verteileinrichtung für im Kreis gleichmäßig verteilte Düsen 10 mit einer Düsenbohrung zwischen 2 und 3 mm, die in den Glockenboden 11 eingeschmolzen sind. Es ist vorteilhaft, über dem Glockenboden eine Leitfläche 12, beispielsweise in Form eines rundum konkav gewölbten Kegels vorzusehen, um vor allem das Ablaufen der Absorptionsflüssigkeit beim Spülen des Gerätes zu begünstigen. Die Düsen 10 enden ca. 4 mm über einer Prallplatte 13, die mittels Glasstege 14 an der Glasglocke 9 angeschmolzen ist.

In einer weiteren, in der Zeichnung nicht gezeigten Ausführungsform können die Düsen 10 auch am Umfang der Glasglocke 9 angeordnet sein, so daß sie auf eine am inneren Umfang des Gefäßes 1 angeordnete Prallfläche gerichtet sind.

Vor der Inbetriebnahme des Laborgerätes werden je nach Anwendungsfall 50 bis 150 ml Absorptionsflüssigkeit in das Glasgefäß 1 eingefüllt und anschließend der Mischeinsatz 3 eingesteckt. Sodann wird das zu untersuchende Gas oder Gasgemisch, beispielsweise Luft, mit Hilfe einer Vakuumpumpe von der Entnahmestelle angesaugt und über das Einlaßrohr 8 den Düsen 10 zugeführt. Das mit hoher Geschwindigkeit aus den Düsen austretende Gas durchdringt unter Austausch der Fremdstoffe, beispielsweise Aerosole oder Stäube, intensiv die Absorptionsflüssigkeit und verläßt über die Durchbrechungen 7, die Sammelglocke 5 und das Auslaßrohr 6 das Gerät. Die im Glasgefäß 1 dabei auftretenden Sprühnebel werden durch eine unter dem Schliffkern 4 angeordnete, mit Ablaufschlitzen 16 versehene Glasplatte 15 zurückgehalten.

Nach dieser Probenahme wird der Mischeinsatz nach Entnahme aus dem Glasgefäß zur Gewinnung der Fremdstoffablagerungen gespült und das daraus sowie aus dem Gefäßinhalt bestehende Analysengut einer analytischen Bestimmung zugeführt.

In der praktischen Anwendung des Laborgerätes hat sich gezeigt, daß mit einer Anordnung von fünf Düsen ein Gasdurchsatz bis zu 10 m³/h möglich ist. Durch Erhöhung der Anzahl der Düsen und Vergrößerung des Glasgefäßes können noch höhere Durchsätze erreicht werden. Bei schwieriger Absorption der Fremdstoffe ist es zweckmäßig, zwei oder mehr Laborgeräte in serieller Verbindung vorzusehen.

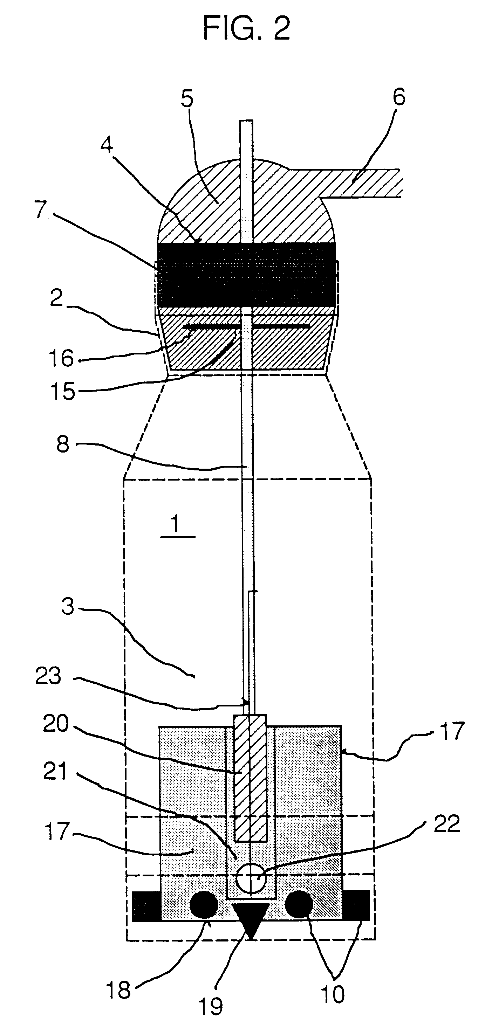

Eine weitere, mit einer rotierbaren Düsenanordnung ausgestattete Ausführungsform des Laborgerätes ist in Figur 2 gezeigt. In dieser besteht die Verteileinrichtung für das angesaugte Gas aus einem geschlossenen Glaszylinder 17, der mittels eines am Zylinderboden 18 angebrachten Lagerkegels 19 auf dem Gefäßboden rotierbar abgestützt ist. Die Drehverbindung zwischen dem feststehenden Einlaßrohr 8 und dem drehbaren Zylinder ist durch einen am Einlaßrohr angeschmolzenen, rohrförmigen Schliffkern 20 und eine in den Glaszylinder integrierte Schliffhülse 21 hergestellt. Die Schliffhülse ist mit mindestens zwei gegenüberliegend angeordneten Durchtrittsöffnungen 22 versehen, durch welche das zu untersuchende Gas aus dem Einlaßrohr 8 in den Glaszylinder 17 strömen kann. Gleichmäßig um den unteren Umfang des Zylinders verteilt sind in die Zylinderwand die Düsen 10 eingeschmolzen, die auf die Gefäßwand gerichtet sind und ca. 4 mm vor dieser enden. Durch geringe, gleichsinnige Schrägstellung der Düsen zum Zylinderradius wird der Glaszylinder infolge der austretenden Gasstrahlen in Rotation versetzt. Dadurch wird zusätzlich ein gewisser Schleuder- und Thrombeneffekt erzeugt, der die Durchmischung von Gas und Absorptionsflüssigkeit intensiviert.

Die Düsen 10 können anstelle an der Zylinderwand auch am Zylinderboden angebracht werden. Ebenso ist es möglich, die oben beschriebene Glasglocke 9 auf die gleiche Weise rotierbar auszuführen.

Es hat sich als zweckmäßig erwiesen, einen Niederhalter für den Glaszylinder 17 vorzusehen, beispielsweise in Form eines im Einlaßrohr 8 angeschmolzenen, bis nahe an den Boden der Schliffhülse 21 reichenden Glasstiftes 23, der verhindert, daß der Zylinder durch Auftriebskräfte nach oben gedrückt wird und dabei der Boden der Schliffhülse in Reibkontakt mit dem Schliffkern 20 tritt.

Das Laborgerät nach der Erfindung erlaubt durch die mehrfache Düsenanordnung bei variierbarer Anzahl der Düsen im Vergleich zu den bekannten Geräten die Probenahme erheblich größerer Gasmengen im vergleichbaren Zeitraum bzw. bei den bisher üblichen Gasmengen eine wesentlich kürzere Probenahmezeit. Die Einsatzmöglichkeit der Spurenanalyse wird dadurch bedeutend erweitert.

## Patentansprüche

1. Laborgerät zum Abscheiden von gasförmigen, flüssigen und festen Stoffen aus Gasproben, bestehend aus einem zylindrischen Gefäß (1) mit einer Hülse (2) und einem Mischeinsatz (3), der einen in die Hülse einsteckbaren Kern (4), ein durch den Kern geführtes Einlaßrohr (8) und ein Auslaßrohr (6) aufweist, dadurch gekennzeichnet, daß mehrere Düsen (10) mit einer Düsenbohrung zwischen 2 und 3 mm vorgesehen sind, die über eine Verteileinrichtung (9, 17) mit dem unteren Ende des Einlaßrohres (8) in Verbindung stehen und auf eine Prallfläche (13) gerichtet sind.

2. Laborgerät nach Anspruch 1, dadurch gekennzeichnet, daß die Düsen (10) in einem Abstand von wenigen Millimeter über einer bodenseitigen Prallfläche (13) angeordnet sind.

3. Laborgerät nach Anspruch 1, dadurch gekennzeichnet, daß die Düsen (10) in einem Abstand von wenigen Millimeter gegenüber der Innenwand des Gefäßes (1) angeordnet sind.

4. Laborgerät nach Anspruch 1 bis 3, dadurch gekennzeichnet, daß die Verteileinrichtung aus einer halbkugelförmigen, zentral mit dem Einlaßrohr (8) verbundenen, geschlossenen Glocke (9) besteht, in die die Düsen (10) eingeschmolzen sind.

5. Laborgerät nach Anspruch 4, dadurch gekennzeichnet, daß in der Glocke (9) zwischen den Düsen (10) und dem Zentrum unterhalb des Einlaßrohres (8) Leitflächen (12) angeordnet sind.

6. Laborgerät nach Anspruch 1 bis 3, dadurch gekennzeichnet, daß die Verteileinrichtung aus einem zentral mit dem Einlaßrohr (8) verbundenen, geschlossenen Zylinder (17) besteht, in den die Düsen (10) eingeschmolzen sind.

7. Laborgerät nach Anspruch 4 bis 6, dadurch gekennzeichnet, daß der Zylinder (17) bzw. die Glocke (9) mittels eines am Zylinder- bzw. Glockenboden angebrachten und auf dem Gefäßboden abgestützten Lagerkegels (19) rotierbar gehalten ist, wobei das Einlaßrohr (8) mit einem rohrförmigen Kern (20) und Zylinder bzw. Glocke mit einer Durchtrittsöffnungen (22) aufweisenden Hülse (21) versehen sind, die zueinander drehbar sind, und die Düsen (10) zur Rotationsachse bzw. zum Zylinderradius gleichsinnig schräg gestellt sind.

## Claims

1. Laboratory apparatus for separating a gaseous, livid or solid substance from a gas sample, comprising a cylindrical vessel (1) with a sleeve (2) and a mixer insert (3) comprising a core (4) which is insertable into the sleeve, an inlet tube (8) which passes through the core, and an outlet tube (6), charaterized in that there are provided a plurality of nozzles (10) with an orifice from 2 to 3 mm in size which communicate with the lower end of the inlet tube (8) via a distributor means (9, 17) and are directed toward an impingement surface (13).

2. Laboratory apparatus as claimed in claim 1, charaterized in that the nozzles (10) are disposed at a distance of a few millimeters above a bottom side impingement surface (13).

3. Laboratory apparatus as claimed in claim 1, charaterized in that the nozzles (10) are disposed at a distance of a few millimeters from the inner surface of the vessel (1).

4. Laboratory apparatus as claimed in claim 1 or 2 or 3, charaterized in that the distributor means comprises a semispheroidal, closed bell (9) which is connected at its midpoint with the inlet tube (8) and into which the nozzles (10) have been fused.

5. Laboratory apparatus as claimed in claim 4, charaterized in that a guide surface (12) has been arranged within the bell (9) between the nozzles (10) and the midpoint underneath the inlet tube (8).

6. Laboratory apparatus as claimed in claim 1 or 2 or 3, charaterized in that the distributor means comprises a closed cylinder (17) which is connected centrally to the inlet tube (8) and into which the nozzles (10) have been fused.

7. Laboratory apparatus as claimed in claim 4 or 5 or 6, charaterized in that the cylinder (17) or bell (9) is held rotatably by means of a bearing cone (19) attached to the cylinder or bell bottom and resting on the vessel floor, the inlet tube (8) having been provided with a tubular core (20) and the cylinder or bell with a sleeve (21) containing perforations (22), the core (20) and the sleeve (21) being rotatable relative to one another, and the nozzles (10) being uniformly inclined relative to the axis of rotation or the cylinder radius.

## Revendications

1. Appareil de laboratoire pour la séparation de substances gazeuses, liquides et solides à partir d'échantillons de gaz, se composent d'un récipient cylindrique (1) comportant un manchon (2) et d'un élément mélangeur (3) qui s'introduit dans ce récipient et qui comporte un noyau (4) insérable dans le manchon, un tube d'arrivée (8) passant à travers le noyau et un tube de départ (6), caractérise en ce qu'il est prévu plusieurs buses (10) présentant un orifice de 2 à 3 mm, qui sont en communication avec l'extrémité inférieure du tube d'arrivée (8) par l'intermédiaire d'un dispositif de répartition (9, 17) et qui sont dirigées vers une surface de rebondissement (13).

2. Appareil de laboratoire selon la revendication 1, caractérisé en ce que les buses (10) sont disposées à une distance de quelques millimètres au-dessus d'une surface de rebondissement (13) du cote du fond.

3. Appareil de laboratoire selon la revendication 1, caractérisé en ce que les buses (10) sont disposées à une distance de quelques millimètres par rapport à la paroi intérieure du récipient (1).

4. Appareil de laboratoire selon l'une quelconque des revendications 1 à 3, caractérisé en ce que le dispositif de répartition est constitué par une cloche hémisphérique fermée (9) qui est raccordée au tube d'arrivée (8) en position centrale et dans laquelle sont scellées les buses (10).

5. Appareil de laboratoire selon la revendication 4, caractérisé en ce que des surfaces directrices (12) sont disposées dans la cloche (9) entre les buses (10) et le centre au-dessous du tube d'arrivée (8).

6. Appareil de laboratoire selon l'une quelconque des revendications 1 à 3, caractérisé en ce que le dispositif de répartition est constitué par un cylindre fermé (17) qui est raccordé au tube d'arrivée (8) en position centrale et dans lequel sont scellées les buses (10).

7. Appareil de laboratoire selon l'une quelconque des revendications 4 à 6, caractérisé en ce que le cylindre (17) ou la cloche (9) est maintenu à rotation au moyen d'une bille de support (19) qui est montée sur le fond du cylindre ou de la cloche et qui prend appui sur le fond du récipient, le tube d'arrivée (8) étant muni d'un noyau tubulaire (20) et le cylindre ou la cloche étant muni d'une douille (21) comportant des ouvertures de passage (22), le noyau et la douille pouvant tourner l'un par rapport a l'autre et les buses (10) étant placées obliquement dans le même sens par rapport à l'axe de revolution ou au rayon du cylindre.
